# EUROPEAN PATENT APPLICATION

(11) **EP 4 574 226 A1**
(43) Date of publication of application: **25.06.2025**
(21) Application number: 23854919.0
(22) Date of filing: 16.08.2023
(51) Int. Cl.: A63F 1/06

(54) **GAME MONITORING SYSTEM**

(30) Priority: 18.08.2022 JP 2022130332
(71) Applicant: ANGEL GROUP CO., LTD., Higashiomi-shi Shiga 527-0232 (JP)
(72) Inventor: SHIGETA Yasushi, Higashiomi-shi, Shiga 527-0232 (JP)
(74) Representative: Bardehle Pagenberg Partnerschaft mbB Patentanwälte Rechtsanwälte
(86) International application number: PCT/JP2023/029647
(87) International publication number: WO 2024/038885

(57) **Abstract**

The present invention is to provide a game monitoring system for monitoring a game on a real table game.

A game monitoring system (100) comprises: a chip ID identifying portion (22) configured to identify, when a gaming chip (50) to which a chip ID is given is in a betting area (112) on a game table (110), the chip ID of the gaming chip (50); a first camera (11) configured to image a player playing a game at the game table (110) and the gaming chip (50) on the game table (110) to generate an image; a player detecting portion (23) configured to detect the player from the image; a chip detecting portion (21) configured to detect the gaming chip (50) from the image; a first associating portion (25) configured to associate the player detected by the player detecting portion (23) with the gaming chip (50) detected by the chip detecting portion (21) as the player who bet the gaming chip (50); a second associating portion (26) configured to associate the chip ID of the gaming chip (50) identified by the chip ID identifying portion (22) with the player associated with the gaming chip (50) by the first associating portion (25); and a recording portion (28) configured to record a pair of the chip ID of the gaming chip (50) and an image of the player associated with the chip ID of the gaming chip (50) by the second associating portion (25).

## Description

### CROSS-REFERENCE OF RELATED APPLICATIONS

This application claims the benefit of Patent Application No. 2022-130332 filed in Japan on August 18, 2022, the contents of which application are incorporated herein by reference.

### TECHNICAL FIELD

The present invention relates to a game monitoring system for monitoring a game.

### BACKGROUND

Previously, in a game played in a casino and the like, a game play by a player is monitored for illicitness detection, patron rating, and the like. It is possible by performing electronically all of the game, betting by the player, and settlement for the betting to grasp a result of the game, the betting by the player, a win and loss of the player, and amount thereof as electronic information. WO2022/085706A1 is an example of references related to the prior art.

### SUMMARY OF THE INVENTION

Similarly, in a real table game using a physical game table, playing card, and gaming chip, there is also a desire to monitor a game and grasp amounts of betting, win, loss, and the like of a player. For this purpose, in a prior game monitoring system, a movement of the gaming chip at the game table is monitored by building an RFID in the gaming chip and reading the RFID at a betting area or a chip tray of the game table, and a player is identified by that the player presents a membership card.

A purpose of the present invention is to provide a game monitoring system for monitoring a game on a real table game.

A game monitoring system according to a first aspect has a configuration comprising: a chip ID identifying means configured to identify, when a gaming chip to which a chip ID is given is in a predetermined area on a game table, the chip ID of the gaming chip; an imaging means configured to image a player playing a game at the game table and the gaming chip on the game table to generate an image; a player detecting means configured to detect the player from the image; a chip detecting means configured to detect the gaming chip from the image; a first associating means configured to associate the player detected by the player detecting means with a first gaming chip detected by the chip detecting means as the player who bet the first gaming chip; a second associating means configured to associate a chip ID of the first gaming chip identified by the chip ID identifying means with the player associated with the first gaming chip by the first associating means; and a recording means configured to record a pair of the chip ID of the first gaming chip and an image of the player associated with the chip ID of the first gaming chip by the second associating means.

By this configuration, with respect to the gaming chip in the predetermined area on the game table, the chip ID thereof is associated with the player who bet the gaming chip and it is recorded, and so it is possible to monitor the game on the real table game.

A game monitoring system according to a second aspect has a configuration, in the game monitoring system according to the first aspect, further comprising: a storage means configured to store the chip ID of the gaming chip and an owner thereof so as to associate them with each other; and a comparing means configured to compare an owner associated with the chip ID of the first gaming chip in the storage means with the player associated with the chip ID of the first gaming chip by the second associating means, and output, when the owner associated with the chip ID of the first gaming chip in the storage means does not match the player associated with the chip ID of the first gaming chip by the second associating means, a signal indicating a mismatch.

By this configuration, with respect to the gaming chip placed in the predetermined area on the game table, in the case where the person stored as the owner of that gaming chip does not match the person identified based on the image as the player who bet the gaming chip, it is possible to inform that matter.

A game monitoring system according to a third aspect has a configuration in which, in the game monitoring system according to the second aspect, the player is given to a player ID, the game monitoring system further comprises a player ID identifying means configured to identify a player ID of the player detected by the player detecting means, the storage means is configured to store the chip ID of the gaming chip and a player ID of the player who is the owner thereof so as to associate them with each other, and the comparing means is configured to compare a player ID of the owner associated with the chip ID of the first gaming chip in the storage means with a player ID identified by the player ID identifying means with respect to the player associated with the chip ID of the first gaming chip by the second associating means, and output, when the player ID of the owner associated with the chip ID of the first gaming chip in the storage means does not match the player ID identified by the player ID identifying means with respect to the player associated with the chip ID of the first gaming chip by the second associating means, a signal indicating a mismatch.

By this configuration, with respect to the gaming chip placed in the predetermined area on the game table, in the case where the ID of the person stored as the owner of the gaming chip does not match the ID of the person identified based on the image as the player who bet the gaming chip, it is possible to inform that matter.

A game monitoring system according to a fourth aspect has a configuration in which, in the game monitoring system according to the second aspect, the storage means is configured to store the chip ID of the gaming chip and face information of the owner thereof so as to associate them with each other, and the comparing means is configured to compare face information associated with the chip ID of the first gaming chip in the storage means with face information extracted from the image with respect to the player associated with the first gaming chip by the second associating means, and output, when the face information associated with the chip ID of the first gaming chip in the storage means does not match the face information extracted from the image with respect to the player associated with the first gaming chip by the second associating means, a signal indicating a mismatch.

By this configuration, with respect to the gaming chip placed in the predetermined area on the game table, in the case where the face information of the person stored as the owner of the gaming chip does not match the face information of the person identified based on the image as the player who bet the gaming chip, it is possible to inform that matter.

A game monitoring system according to a fifth aspect has a configuration, in the game monitoring system according to the second aspect, further comprising a controlling means configured to rewrite, when the comparing means determines that the owner associated with the chip ID of the first gaming chip in the storage means does not match the player associated with the chip ID of the first gaming chip by the second associating means, the owner associated with the chip ID of the first gaming chip in the storage means to the player associated with the chip ID of the first gaming chip by the second associating means.

By this configuration, it is possible to rewrite the owner stored in association with the chip ID of the gaming chip to the correct owner.

A game monitoring system according to a sixth aspect has a configuration, in the game monitoring system according to the second aspect, further comprising an updating means configured to rewrite an owner associated with a chip ID of a payout gaming chip paid out by a dealer in the storage means to a player associated with the payout gaming chip by the second associating means.

By this configuration, it is possible to rewrite the owner stored in association with the gaming chip paid out from the dealer to the player who received that payout gaming chip.

A game monitoring system according to a seventh aspect has a configuration, in the game monitoring system according to the second aspect, further comprising an updating means configured to rewrite an owner associated with a chip ID of a payout gaming chip paid out by a dealer in the storage means to a player associated with a first gaming chip moved from the predetermined area together with the payout gaming chip by the second associating means.

By this configuration, it is possible to rewrite the owner stored in association with the chip ID of the gaming chip paid out by the dealer to the player who bet the gaming chip which was the subject to which that gaming chip was paid out.

A game monitoring system according to an eighth aspect has a configuration in which, in the game monitoring system according to any of the first to seventh aspects, the gaming chip includes an RFID tag storing the chip ID, and the chip ID identifying means is configured to identify the chip ID of the gaming chip by reading the chip ID from the RFID tag.

By this configuration, it is possible to identify the chip ID by the RFID.

A game monitoring system according to a ninth aspect has a configuration in which, in the game monitoring system according to any of the first to eighth aspects, the gaming chip includes an expression of the chip ID on a side surface, and the chip ID identifying means is configured to identify the chip ID of the gaming chip by detecting the gaming chip from the image in which the gaming chip is imaged and decoding the chip ID on the side surface of the detected gaming chip.

By this configuration, it is possible to identify the chip ID by the expression on the side surface.

A game monitoring system according to a tenth aspect has a configuration in which, in the game monitoring system according to the first aspect, the player detecting means is configured to detect a hand of the player, and the first associating means is configured to associate, based on a positional relationship between the hand of the player detected by the player detecting means and the gaming chip detected by the chip detecting means, both of them with each other.

By this configuration, it is possible to associate the chip ID of the gaming chip with the player based on the positional relationship between the hand and the gaming chip.

A game monitoring system according to a eleventh aspect has a configuration in which, in the game monitoring system according to the first aspect, the chip ID identifying means is configured to detect a gaming chip from a first image generated by the imaging means and identify the chip ID of the detected gaming chip, the chip detecting means is configured to detect a gaming chip from a second image generated by the imaging means and different from the first image, and the second associating means is configured to identify, based on a relationship between a position of the gaming chip in the first image, detected by the chip ID identifying means and a position of the gaming chip in the second image, detected by the chip detecting means, as the first gaming chip the gaming chips in same positions.

By this configuration, it is possible to identify the gaming chips in the same positions from the two images as the same gaming chip.

A game monitoring system according to a twelfth aspect, has a configuration in which, in the game monitoring system according to the eleventh aspect, the imaging means includes a first camera configured to generate the first image and a second camera different from the first camera and configured to generate the second image, and the second associating means is configured to convert the position of the gaming chip in the first image detected by the chip ID identifying means and the position of the gaming chip in the second image detected by the chip detecting means into a common coordinate space to identify as the first gaming chip the gaming chips in the same positions.

By this configuration, it is possible by mapping the gaming chip in the one image of the two images to the other image to identify the gaming chips in the same positions as the same gaming chip.

A game monitoring system according to a thirteenth aspect has a configuration in which, in the game monitoring system according to the first aspect, the chip ID identifying means is configured to identify a position of the gaming chip whose chip ID is identified, on the game table, the chip detecting means is configured to identify a position of the gaming chip detected from the image, on the game table, and the second associating means is configured to identify, based on the position identified by the chip ID identifying means and the position identified by the chip detecting means, as the first gaming chip the gaming chips in same positions.

By this configuration, it is possible to identify the same gaming chips in the same positions as the same gaming chip based on the positions of the gaming chips on the game table in the two images.

A game monitoring system according to a fourteenth aspect has a configuration in which, in the game monitoring system according to the first aspect, the chip ID identifying means is configured to identify a timing when the gaming chip whose chip ID is identified is placed on the game table, the chip detecting means is configured to identify a timing when the gaming chip detected from the image is placed on the game table, and the second associating means is configured to identify, based on the timing identified by the chip ID identifying means and the timing identified by the chip detecting means, as the first gaming chip the gaming chips placed on the game table at the same timing.

By this configuration, it is possible to identify the gaming chip identified by the chip ID identifying means and the gaming chip identified by the chip detecting means as the same gaming chip based on the timings when the gaming chips were placed on the game table.

### BRIEF DESCRIPTION OF DRAWINGS

FIG. 1 is a view showing a game table to which a game monitoring system according to an embodiment of the present invention is applied.
FIG. 2 is a view showing a side surface of a gaming chip according to the embodiment of the present invention.
FIG. 3 is a plan view showing the gaming chip according to the embodiment of the present invention.
FIG. 4 is a block diagram showing the game monitoring system according to the embodiment of the present invention.
FIG. 5 is a view showing an example of an association by a first associating portion according to the embodiment of the present invention.

### DESCRIPTION OF THE PREFERRED EMBODIMENTS

Embodiments of the present invention will be described below, but the embodiments described below are merely examples, and the present invention is not limited to the embodiments described below. Moreover, each element of the plurality of embodiments may be arbitrarily combined.

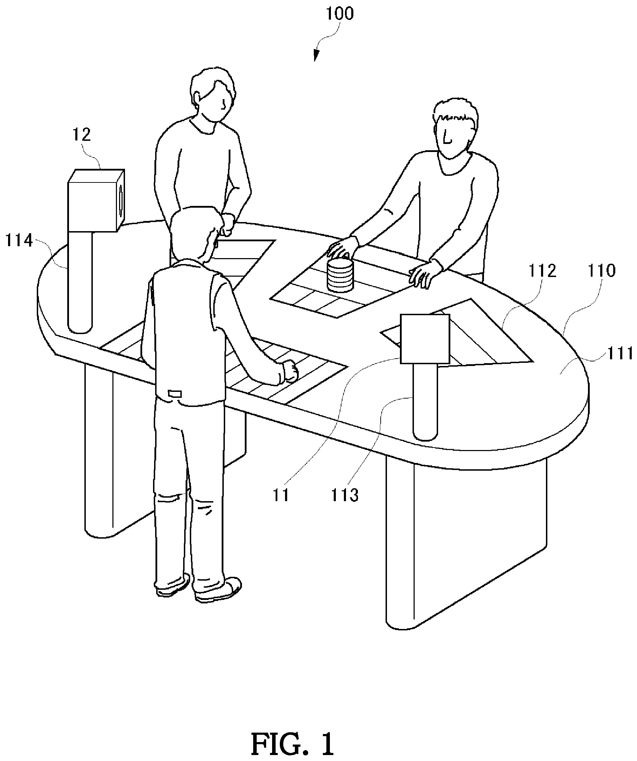

FIG. 1 is a view showing a game table to which a game monitoring system according to an embodiment of the present invention is applied. As is shown in Fig. 1, the game monitoring system 100 according to the present embodiment may be applied to a game table 110 of a casino or the like.

The game table 110 includes a generally oval-shaped table top 111. A dealer positions on one side of the table top 111, and the opposite side of the table top 111 is provided with player positions in which a plurality of players positions. Each player position is provided with a betting area 112 for each player position. In the present embodiment, the game table 110 is a game table for baccarat. The betting area 112 includes each of betting target areas of player, banker, tie, player pair, and banker pair.

The game table 110 is installed with a first camera 11 and a second camera 12. An angle of view and direction of the first camera 11 is set such that it can image the betting areas 112, the gaming chips bet in the betting areas 112 (betting chips), and the players playing at the game table 110. An angle of view and direction of the second camera 12 are set such that it can image the betting areas 112 and the gaming chips bet in the betting areas 112 (betting chips) and such that the gaming chips are imaged larger in comparison with that in the first camera 11. The first camera 11 and second camera 12 are installed on poles 113 and 114 provided on the game table 110. For allotting imaging ranges, a plurality of first cameras 11 and plurality of second cameras 12 may be provided.

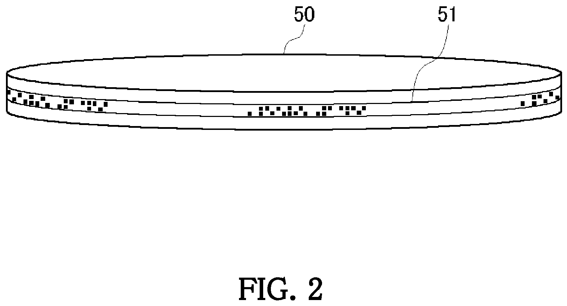

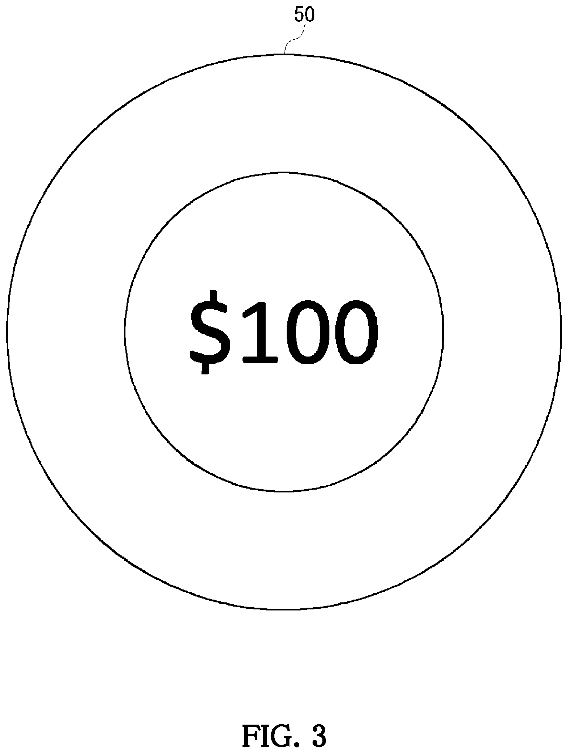

FIG. 2 is a view showing a side surface of the gaming chip according to the embodiment of the present invention, and FIG. 3 is a plan view showing the gaming chip according to the embodiment of the present invention. As is shown in FIG. 2, the side surface of the gaming chip 50 is provided with a center line 51 in the center with respect to the thickness direction. A color of the center line 51 represents a type (value) of the gaming chip 50. Therefore, it is possible to know the value of the gaming chip 50 by the color of the center line 51 by observing the side surface of the gaming chip 50.

A chip ID for identifying the gaming chip 50 is expressed on the center line 51 as code information. In the gaming chip 50 according to the present embodiment, the code information representing the chip ID is represented by the presence or absence of a plurality of dots arranged in upper and lower two rows. That is, 2-bit information is represented by the presence or absence of the upper and lower dots per one column, and 5-byte information is represented by a group of dots in 20 columns. The plurality of dots representing the chip ID may be printed on the side surface of the gaming chip 50 using ink that is not visible under natural light but is made visible by irradiating with infrared or ultraviolet light.

As shown in FIG. 3, on the front surface and back surface of the gaming chip 50, numbers representing the value thereof are expressed. As a matter of course, these numbers correspond to the color of the centerline on the side surface.

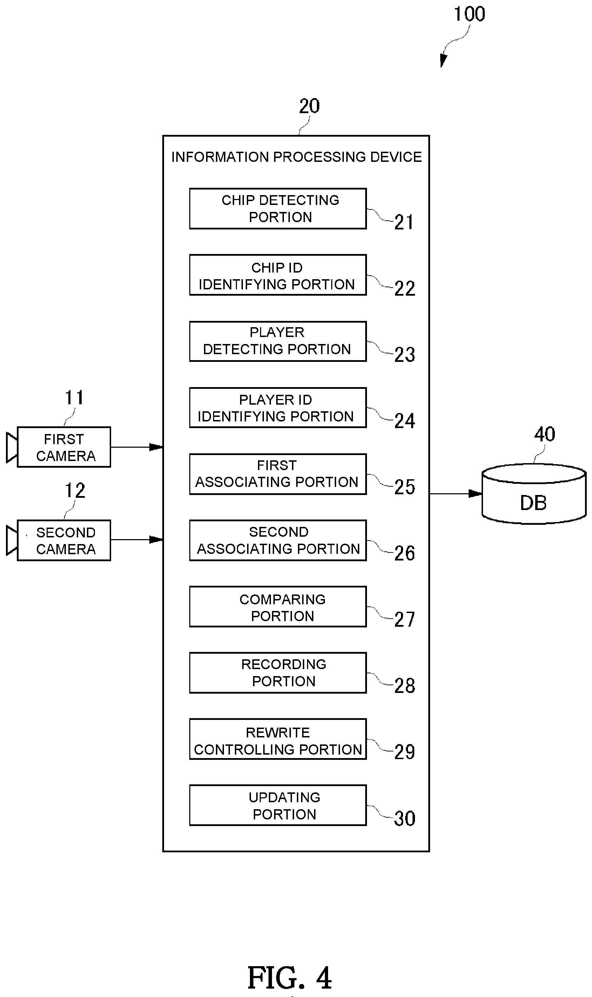

FIG. 4 is a block diagram showing the game monitoring system according to the embodiment of the present invention. In addition to the first camera 11 and second camera 12 described above, the game monitoring system 100 includes an information processing device 20 and a database 40. The first camera 11 and second camera 12 are connected with the information processing device 20 so as to be able to communicate with it, respectively. The information processing device 20 is also connected with the database 40 so as to be able to communicate with it.

The information processing device 20 may be provided at each game table 110, or the first camera 11 and second camera 12 provided at each of a plurality of game tables 110 may be connected to one information processing device 20. The database 40 may be provided at each of a plurality of game tables 110, or one database 40 may be provided for a plurality of game tables 110. The database 40 may also be provided in the cloud.

The first camera 11 and second camera 12 image and generate images at a timing when the player places the gaming chips 50 on the betting area 112 of the game table 110 or at a timing when the gaming chips 50 are placed on the betting area 112 and a game starts (that is, at a timing after which the gaming chips 50 are not allowed to be moved).

The information processing device 20 is a computer consisting of a memory configured to be used as a temporary storing area, a processor configured to perform operations in response to input signals according to information processing programs according to the present embodiment, and a storage device configured to store various types of data. The database 40 includes a storage device and a processor configured to perform processing such as search, update, and the like on information stored in the storage device.

The information processing device 20 has various functions shown in FIG. 4 by executing information processing programs according to the present embodiment. Specifically, the information processing device 20 includes a chip detecting portion 21, a chip ID identifying portion 22, a player detecting portion 23, a player ID identifying portion 24, a first associating portion 25, a second associating portion 26, a comparing portion 27, a recording portion 28, a rewrite controlling portion 29, and an updating portion 30.

The chip detecting portion 21 obtains the image imaged to be obtained by the first camera 11 (hereinafter referred to as a "first image") and detects chip group areas containing chip groups from this first image. In a case where the gaming chips 50 to be bet on the betting area 112 of the game table 110 are stacked and placed on the betting area 112, the chip detecting portion 21 detects the area containing this stack of betting chips as the chip group area (chip stack area). Specifically, the chip detecting portion 21 detects a rectangular frame containing the chip group as the chip group area.

The chip detecting portion 21 detects chip areas corresponding to individual gaming chips from the detected chip group areas. The chip detecting portion 21 may detect the individual chip area at this time using the centerline 51 of the side surface of the gaming chip 50. That is, the chip detecting portion 21 may determine a position and size of the chip area according to a position and length of the centerline 51.

The chip ID identifying portion 22 obtains the image imaged to be obtained by the second camera 12 (hereinafter referred to as a "second image"). Then, the chip ID identifying portion 22 detects the chip group areas and chip areas from this second image as is similar to the chip detecting portion 21. The chip ID identifying portion 22 performs code recognition on the detected chip area to decode the code information of each gaming chip 50. Whereby, the chip ID identifying portion 22 identifies the chip ID of each chip area, and in this way, identifies all chip IDs contained in each chip group area. At this time, the chip ID identifying portion 22 may detect the center line 51 of the gaming chip 50 and perform the code recognition in an area of the detected center line 51.

Instead of this, the chip ID identifying portion 22 may be an RFID system configured to identify the chip IDs of the gaming chips placed in the betting area 112 by RFIDs. In this case, an RFID tag storing the chip ID of the gaming chip is built in the gaming chip. The RFID system includes antennas and readers. The antennas are embedded under the tabletop 111 at positions corresponding to respective betting areas 112. The reader is connected to the antenna and obtains the chip ID from the signal read by the antenna.

The chip detecting portion 21 identifies the position of the detected chip group area and a timing when the chip group area is detected. In addition to or instead of this, the chip ID identifying portion 22 identifies the position of the gaming chip 50 whose chip ID is identified, on the game table. The chip ID identifying portion 22 also identifies a timing when the gaming chip 50 whose chip ID is identified is placed on the game table.

The player detecting portion 23 detects the player from the first image imaged to be obtained by the first camera 11. The player detecting portion 23 detects as the player the whole including the face, the upper body, arms, and hands of the player, and also extracts a skeleton model consisting of respective key points of the face area, the upper body, the arms, and the hands of player. The player detecting portion 23 recognizes the same player's face area and skeleton model or plurality of key points consisting thereof as belonging to one player.

The player ID identifying portion 24 identifies a player ID by performing face recognition on the face area of the first image detected by the player detecting portion 23. The player to be identified by the player ID identifying portion 24 is registered in advance by the face image thereof and given the player ID, and the player ID identifying portion 24 determines which of the registered players the face of the face area is by using face recognition technology. In a case where the player ID identifying portion 24 does not determine that it is any of the registered players as a result of the face recognition, it determines that the player of the face area, that is, the player imaged in the player area is an unregistered player.

The player may be registered by the player ID thereof or by face information thereof. In the case where the player is registered by the player ID thereof, the player ID identifying portion 24 identifies the player ID of the player whose face area is detected from the first image. In the case where the player is registered by the face information, the player ID identifying portion 24 identifies the face information of the player whose face image is detected from the first image. Here, the face information may be a face image of the player or feature extracted from the face image of the player.

The first associating portion 25 associates the player detected by the player detecting portion 23 with the first gaming chip detected by the chip detecting portion 21 as the player who bet the first gaming chip. Specifically, the first associating portion 25 associates, based on a positional relationship between the hand of the player detected by the player detecting portion 23 and the gaming chip 50 detected by the chip detecting portion 21, both of them with each other.

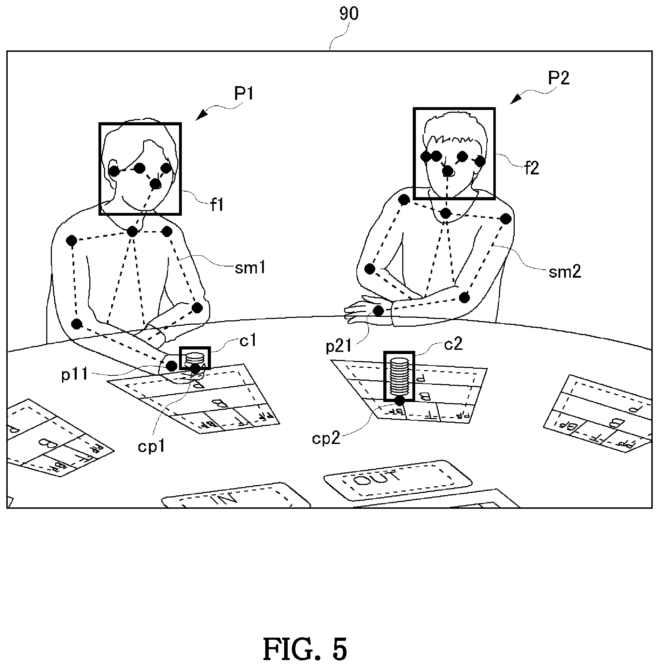

FIG. 5 is a view showing an example of the association by the first associating portion according to the embodiment of the present invention. In the present embodiment, from the same image which is the first image 90 imaged by the first camera 11, the chip detecting portion 21 detects chip group areas c1 and c2 and the player detecting portion 23 detects players P1 and P2. The first associating portion 25 determines, based on distances between the hands p11 and p21 of players P1 and P2 detected by the player detecting portion 23 and the chip group areas c1 and c2, combinations of the hands and the chip group areas, and thus combinations of the players and the chip group areas.

In the example in FIG. 5, since the distance between a basic point cp1 of the chip group area c1 and the hand p11 of the player P1 is equal to or less than a predetermined threshold, the first associating portion 25 associates this chip group area c1 with the player P1. Also, since the distance between a basic point cp2 of the chip group area c2 and the hand p21 of the player P2 is equal to or less than the predetermined threshold, the first associating portion 25 associates this chip group area c2 with the player P2. The basic point may be the center of the lower edge of the rectangular frame consisting the chip group area.

As is described above, since the player detecting portion 23 recognizes the face areas f1 and f2 and the skeleton models sm1 and sm2 including the plurality of key points of the same player as belonging to the same player, the first associating portion 25 can associate the chip group area with any of the face areas, the skeleton models, and each of the key points.

The second associating portion 26 associates the chip ID of the gaming chip 50 identified by the chip ID identifying portion 22 with the player associated with the gaming chip 50 by the first associating portion 25. Specifically, the second associating portion 26 first determines whether the gaming chip 50 detected by the chip detecting portion 21 and the gaming chip 50 detected by the chip ID identifying portion 22 and whose chip ID is identified thereby are the same. For this purpose, based on a relationship between a position of the gaming chip 50 detected by the chip ID identifying portion 22 in the first image and a position of the gaming chip 50 detected by the chip detecting portion 21 in the second image, the gaming chips 50 in the same positions are identified as the same gaming chip 50.

More specifically, the second associating portion 26 converts a position of the chip group area detected by the chip detecting portion 21 in the first image to a position in the second image, and identifies the chip group areas in the same positions as the same gaming chip 50. Alternatively, the second associating portion 26 may, instead of this, convert a position of the chip group area detected by the chip ID identifying portion 22 in the second image to a position in the first image, and identify the chip group areas in the same positions as the same gaming chip 50. Alternatively, the second associating portion 26 may convert both of a position of the chip group area detected by the chip detecting portion 21 in the first image and a position of the chip group area detected by the chip ID identifying portion 22 in the second image into a common coordinate space, and identify the chip group areas in the same positions as the same gaming chip 50.

In this way, the second associating portion 26 identifies the gaming chips 50 in the same positions as the same gaming chip 50 based on the position identified by the chip detecting portion 21 and the position identified by the chip ID identifying portion 22, but, instead of this, the second associating portion 26 may identify, based on a timing when the gaming chip is detected by the chip detecting portion 21 and a timing when the gaming chip 50 is identified by the chip ID identifying portion 22, the gaming chips 50 placed on the game table 110 at the same timing as the same gaming chip 50.

The second associating portion 26 associates the chip ID of the gaming chip identified by the chip ID identifying portion 22 with the player associated with that gaming chip by the first associating portion 25. Specifically, in the case where the player is registered by the player ID, the second associating portion 26 associates the chip ID of the gaming chip identified by the chip ID identifying portion 22 with the player ID of the player associated with that gaming chip by the first associating portion 25. Moreover, in the player is registered by the face information, the second associating portion 26 associates the chip ID of the gaming chip identified by the chip ID identifying portion 22 with the face information of the player associated with that gaming chip by the first associating portion 25.

The recording portion 28 records a pair of the chip ID of the gaming chip 50 and an image of the player associated with the chip ID of that gaming chip 50 by the second associating portion 26. The recording portion 28 may further record the chip ID and the player ID of the player associated therewith, or the chip ID and the face information of the player associated therewith, as is described below. As is in the present embodiment, since the recording portion 28 records, in association with the chip ID identified by the chip ID identifying portion 22, not the player ID for identifying the player associated with the chip ID and but only the image of the player, personal information of the player is not recorded, and so privacy of the player is maintained.

The database 40 stores the chip ID of the gaming chip 50 and an owner so as to associate them with each other. Specifically, in the case where the player is registered by the player ID, the database 40 stores the chip ID of the gaming chip 50 and the player ID of the player who is the owner thereof so as to associate them with each other. Alternatively, in the case where the player is registered by the face information, the database 40 stores the chip ID of the gaming chip 50 and the face information of the player who is the owner thereof so as to associate them with each other.

The comparing portion 27 compares the owner associated with the chip ID of the gaming chip 50 in the database 40 with the player associated with the chip ID of that gaming chip 50 by the second associating portion 26. In a case where the owner associated with the chip ID of the gaming chip 50 in the database 40 and the player associated with the chip ID of the gaming chip 50 by the second associating portion 26 do not match, the comparing portion 27 outputs a signal indicating a mismatch.

Specifically, in the case where the player is registered by the player ID, the comparing portion 27 compares the player ID associated with the chip ID of the gaming chip 50 in the database 40 with the player ID identified by the player ID identifying portion 24 with respect to the player associated with the chip ID of that gaming chip 50 by the second associating portion 26. In this case, in a case where the play ID of the owner associated with the chip ID of the gaming chip 50 in the database 40 does not match the player ID of the player associated with the chip ID of that gaming chip 50 by the second associating portion 26, the comparing portion 27 outputs a signal indicating a mismatch.

In the case where the database 40 stores the chip ID of the gaming chip 50 and the face information of the owner thereof so as to associate them with each other, the comparing portion 27 compares, in addition to or instead of the specific example above, the face information associated with the chip ID of the gaming chip 50 in the database 40 with the face information extracted from the image with respect to the player associated with that gaming chip by the second associating portion 26. In this case, in a case where the face information associated with the chip ID of the gaming chip 50 in the database 40 does not match the face information extracted from the image with respect to the player associated with the gaming chip 50 by the second associating portion 26, the comparing portion 27 outputs a signal indicating a mismatch.

It is possible by the above functions of the comparing portion 27 to output, when the gaming chip 50 is operated on the game table 110 by a player different from the original owner for that gaming chip 50, a signal indicating the mismatch and warn such mismatch.

In the case where the comparing portion 27 determines that the owner associated with the chip ID of the gaming chip 50 in the database 40 does not match the player associated with the chip ID of that gaming chip by the second associating portion 26, the rewrite controlling portion 29 rewrites the owner associated with the chip ID of the gaming chip 50 in the database 40 to the player associated with the chip ID of that gaming chip by the second associating portion 26.

It is possible by this rewrite controlling portion 29 to, in the case where incorrect association of the gaming chip 50 with the player is performed, correct it and perform an association with the correct player. Moreover, in a case where a chip ID not associated with any player is identified, the rewrite controlling portion 29 rewrites the player associated with that chip ID by the second associating portion 26 as the owner of that chip ID.

In a case where the player wins a game and receives a payout of the gaming chip 50 from the dealer, the owner of the gaming chip related to this payout (hereinafter referred to as a "payout gaming chip") should be changed from the dealer or the casino to the player who won the game. Then, the updating portion 30 rewrites the owner associated with a chip ID of a payout gaming chip paid out from the dealer in the database 40 to the player associated with the payout gaming chip by the second associating portion 26. For this purpose, the first camera 11 and second camera 12 perform imaging at the time of the payout of the gaming chips 50, the first associating portion 25 associates a chip group area of the payout gaming chips with a player who is trying to take the payout gaming chips, and the updating portion 30 updates the database 40 according to this association.

Alternatively, the updating portion 30 rewrites the owner associated with the chip ID of the payout gaming chip paid out from the dealer in the database 40 to the player associated with the gaming chip 50 moved from the betting area 112 together with the payout gaming chip by the second associating portion 26. Whereby, the chip ID of the payout gaming chip 50 is stored in the database 40 in association with the player ID of the player who received it.

In the case where the RFID tag storing the chip ID is built in the gaming chip 50 and the chip ID identifying portion 22 reads the chip ID from the RFID tag of the gaming chip 50 at the betting area 112, the RFID tag of the payout gaming chip may be read at the betting area 112 on which it paid out, whereby identifying that chip ID and updating the player ID which should be associated therewith.

Moreover, in the above embodiment, the first camera that generates the first image by imaging and the second camera that generates the second image by imaging are separate cameras, but they may be a single camera. In this case, this single camera generates both of the first image and the second image. Then, in this case, imaging conditions (an angle of view, resolution, imaging direction, and the like) may be changed in cases imaging the first image and imaging the second image.

As is described above, in the game monitoring system 100 according to the present embodiment, the first associating portion 25 associates the gaming chip 50 (chip stack) on the game table 110, detected from the first image by the chip detecting portion 21 with the player detected from the first image by the player detecting portion 23, and the chip ID identifying portion 22 identifies the chip ID of the gaming chip 50 based on the second image, whereby the second associating portion 26 associates the player with the chip ID. Whereby, it is possible to determine which of the players the gaming chip 50 on the game table 110 is the gaming chip 50 of, and perform a game management such as illicitness detection, patron rating, and the like.

As is described above, the method of identifying the chip ID of the gaming chip 50 on the game table 110 is not limited to that by the image, but may also be that by the RFID tag and RFID reading system. Since it is possible by the above embodiment to perform the association of the gaming chip with the player who operates that gaming chip, it is possible to determine which player bet the gaming chip based on the image, for example, in a case where the player bet the gaming chip 50 on the betting area 112 other than the betting area in front of one's own player position or with respect to the gaming chip 50 bet by a back bettor who is not seated in the player positions.

In addition, the information processing device 20 may further recognize a position, type, and number of the gaming chips 50 being bet on the game table 110 based on the first or second image, or may recognize a position, type, and number of the gaming chips 50 being bet on the game table 110 by building in the gaming chips 50 the RFID tag storing at least information on the type thereof, building a plurality of antennas in the game table 110, and reading the RFID tag of the gaming chip 50.

### DESCRIPTION OF THE REFERENCES

100 Game monitoring system
110 Game table
111 Table top
112 Betting area
11 First camera
12 Second camera
20 Information processing device
21 Chip detecting portion
22 Chip ID identifying portion
23 Player detecting portion
24 Player ID identifying portion
25 First associating portion
26 Second associating portion
27 Comparing portion
28 Recording portion
29 Rewrite controlling portion
30 Updating portion
40 Database

## Claims

1. A game monitoring system comprising:
a chip ID identifying means configured to identify, when a gaming chip to which a chip ID is given is in a predetermined area on a game table, the chip ID of the gaming chip;
an imaging means configured to image a player playing a game at the game table and the gaming chip on the game table to generate an image;
a player detecting means configured to detect the player from the image;
a chip detecting means configured to detect the gaming chip from the image;
a first associating means configured to associate the player detected by the player detecting means with a first gaming chip detected by the chip detecting means as the player who bet the first gaming chip;
a second associating means configured to associate a chip ID of the first gaming chip identified by the chip ID identifying means with the player associated with the first gaming chip by the first associating means; and
a recording means configured to record a pair of the chip ID of the first gaming chip and an image of the player associated with the chip ID of the first gaming chip by the second associating means.

2. A game monitoring system according to claim 1, further comprising:
a storage means configured to store the chip ID of the gaming chip and an owner thereof so as to associate them with each other; and
a comparing means configured to compare an owner associated with the chip ID of the first gaming chip in the storage means with the player associated with the chip ID of the first gaming chip by the second associating means, and output, when the owner associated with the chip ID of the first gaming chip in the storage means does not match the player associated with the chip ID of the first gaming chip by the second associating means, a signal indicating a mismatch.

3. The game monitoring system according to claim 2, wherein
the player is given to a player ID,
the game monitoring system further comprises a player ID identifying means configured to identify a player ID of the player detected by the player detecting means,
the storage means is configured to store the chip ID of the gaming chip and a player ID of the player who is the owner thereof so as to associate them with each other, and
the comparing means is configured to compare a player ID of the owner associated with the chip ID of the first gaming chip in the storage means with a player ID identified by the player ID identifying means with respect to the player associated with the chip ID of the first gaming chip by the second associating means, and output, when the player ID of the owner associated with the chip ID of the first gaming chip in the storage means does not match the player ID identified by the player ID identifying means with respect to the player associated with the chip ID of the first gaming chip by the second associating means, a signal indicating a mismatch.

4. The game monitoring system according to claim 2, wherein
the storage means is configured to store the chip ID of the gaming chip and face information of the owner thereof so as to associate them with each other, and
the comparing means is configured to compare face information associated with the chip ID of the first gaming chip in the storage means with face information extracted from the image with respect to the player associated with the first gaming chip by the second associating means, and output, when the face information associated with the chip ID of the first gaming chip in the storage means does not match the face information extracted from the image with respect to the player associated with the first gaming chip by the second associating means, a signal indicating a mismatch.

5. The game monitoring system according to claim 2, further comprising a controlling means configured to rewrite, when the comparing means determines that the owner associated with the chip ID of the first gaming chip in the storage means does not match the player associated with the chip ID of the first gaming chip by the second associating means, the owner associated with the chip ID of the first gaming chip in the storage means to the player associated with the chip ID of the first gaming chip by the second associating means.

6. The game monitoring system according to claim 2, further comprising an updating means configured to rewrite an owner associated with a chip ID of a payout gaming chip paid out by a dealer in the storage means to a player associated with the payout gaming chip by the second associating means.

7. The game monitoring system according to claim 2, further comprising an updating means configured to rewrite an owner associated with a chip ID of a payout gaming chip paid out by a dealer in the storage means to a player associated with a first gaming chip moved from the predetermined area together with the payout gaming chip by the second associating means.

8. The game monitoring system according to claim 1, wherein
the gaming chip includes an RFID tag storing the chip ID, and
the chip ID identifying means is configured to identify the chip ID of the gaming chip by reading the chip ID from the RFID tag.

9. The game monitoring system according to claim 1, wherein
the gaming chip includes an expression of the chip ID on a side surface, and
the chip ID identifying means is configured to identify the chip ID of the gaming chip by detecting the gaming chip from the image in which the gaming chip is imaged and decoding the chip ID on the side surface of the detected gaming chip.

10. The game monitoring system according to claim 1, wherein
the player detecting means is configured to detect a hand of the player, and
the first associating means is configured to associate, based on a positional relationship between the hand of the player detected by the player detecting means and the gaming chip detected by the chip detecting means, both of them with each other.

11. The game monitoring system according to claim 1, wherein
the chip ID identifying means is configured to detect a gaming chip from a first image generated by the imaging means and identify the chip ID of the detected gaming chip,
the chip detecting means is configured to detect a gaming chip from a second image generated by the imaging means and different from the first image, and
the second associating means is configured to identify, based on a relationship between a position of the gaming chip in the first image, detected by the chip ID identifying means and a position of the gaming chip in the second image, detected by the chip detecting means, as the first gaming chip the gaming chips in same positions.

12. The game monitoring system according to claim 11, wherein
the imaging means includes a first camera configured to generate the first image and a second camera different from the first camera and configured to generate the second image, and
the second associating means is configured to convert the position of the gaming chip in the first image detected by the chip ID identifying means and the position of the gaming chip in the second image detected by the chip detecting means into a common coordinate space to identify as the first gaming chip the gaming chips in the same positions.

13. The game monitoring system according to claim 1, wherein
the chip ID identifying means is configured to identify a position of the gaming chip whose chip ID is identified, on the game table,
the chip detecting means is configured to identify a position of the gaming chip detected from the image, on the game table, and
the second associating means is configured to identify, based on the position identified by the chip ID identifying means and the position identified by the chip detecting means, as the first gaming chip the gaming chips in same positions.

14. The game monitoring system according to claim 1, wherein
the chip ID identifying means is configured to identify a timing when the gaming chip whose chip ID is identified is placed on the game table,
the chip detecting means is configured to identify a timing when the gaming chip detected from the image is placed on the game table, and
the second associating means is configured to identify, based on the timing identified by the chip ID identifying means and the timing identified by the chip detecting means, as the first gaming chip the gaming chips placed on the game table at the same timing.
